Europäisches Patentamt

European Patent Office

Office européen des brevets

(19)

(11) Publication number : **0 509 967 A2**

## (12) EUROPEAN PATENT APPLICATION

(21) Application number : 92830166.2

(22) Date of filing : 02.04.92

(51) Int. Cl.⁵ : **A23G 9/28**

(30) Priority : **05.04.91 IT MC910024**

(43) Date of publication of application :
**21.10.92 Bulletin 92/43**

(84) Designated Contracting States :
**AT BE CH DE DK ES FR GB GR LI LU MC NL PT
SE**

(71) Applicant : **CENTRO DESIGN di ALDO
CIABATTI & C. - S.a.s.
Via Caldora, 11
I-67100 L'Aquila (IT)**

(72) Inventor : **Ciabatti, Piero
Via dei Salé, 36
I-00044 Frascati (RM) (IT)**

(74) Representative : **Baldi, Claudio
Piazza Ghislieri, 3
I-60035 Jesi (Ancona) (IT)**

(54) **Dispensing machine for creamy ice-cream.**

(57)  This invention concerns a device for the automatic dosing of creamy hand made ice-cream consisting of a container in which the ice cream is submitted to the action of a compressed air piston which tends to push it constantly towards the outflow opening on the bottom of the container ; said outflow opening has a mechanism which temporarily widens the opening so that the ice cream may be supplied - and then closes it.

FIG. 1

EP 0 509 967 A2

This design patent for an industrial invention concerns a device for the automatic distribution of creamy hand made ice cream.

Currently hand made ice cream can only be served manually by an operator who uses a spoon to lift the ice cream from the containers or barrels is refrigerated counters.

As a matter of fact, a number of automatic ice cream distributing devices having an internal container and a nozzle through which the product drops onto a cone or cup, already exist; it should be noted however that these devices can be used only with ice cream which is not extremely creamy, like cream or powder based ice creams.

These devices absolutely can not be used with hand made ice cream which is too thick and creamy; said devices in fact can not provide sufficient pressure to push a dose of this type of ice cream through the nozzle.

The device according to the invention was designed for this reason and is therefore an absolute novelty in that it can automatically distribute hand made ice creams which up to now it has only been possible to distribute by hand.

The invention in question is also designed to display the ice creams distributed automatically so as to continue attracting the attention of potential consumers to the ice-cream.

The device according to the invention consists of a transparent cylindrical element (the container of the ice cream) with a supply mouthpiece at the bottom and closed at the top with a cover having a hole into which a compressed air pipe is coupled; the compressed air pushes - from top to bottom - a sealed piston fitted inside the element, on the ice cream so that the same gradually moves downwards.

Said element must be coupled - vertically - on a hollow base housing the product dosing mechanisms.

Said mechanisms may consist of a gate system which releases the outflow section of the supply mouthpiece for the length of time required to distribute a portion of ice cream, which in this case will consist of a uniform and continuous jet having a variable cross-section corresponding to that of the supply mouthpiece.

As an alternative to this dosing system, the device in question can include another system which supplies regular balls of ice cream from the mouthpiece of the element.

The entire device according to the invention can be installed in large refrigerated stands and can house numerous cylinders of ice cream in different flavours and colours - from which the consumer himself can distribute the ice cream of his choice by means of a coin box; it follows therefore that by inserting a coin in each distributing device it will be possible to operate - by means of buttons or levers - the dosing mechanisms of each cylinder.

It should be noted that the above cylinders can be made with a double concentric transparent wall which creates a space around the actual ice cream container, and which can be filled with gas at a low temperature; in this case it is evident that this type of cylinder can even be used outside the above refrigerated counters.

For major clarity the description continues with reference to the drawings which are intended for purposes of illustration and not in a limiting sense, where:
- figure 1 is a vertical axial plane cross-section of the device in question in the version with gate dosing device;
- figure 2 is a vertical axial plane cross-section of the device in question in the version with opening dosing device;
- figure 3 is a side view orthogonal to figure 2 of only the opening dosing system;
- figure 4A, 4B, and 4C show three different positions of the gears in the above opening dosing device during the same number of operating phases.

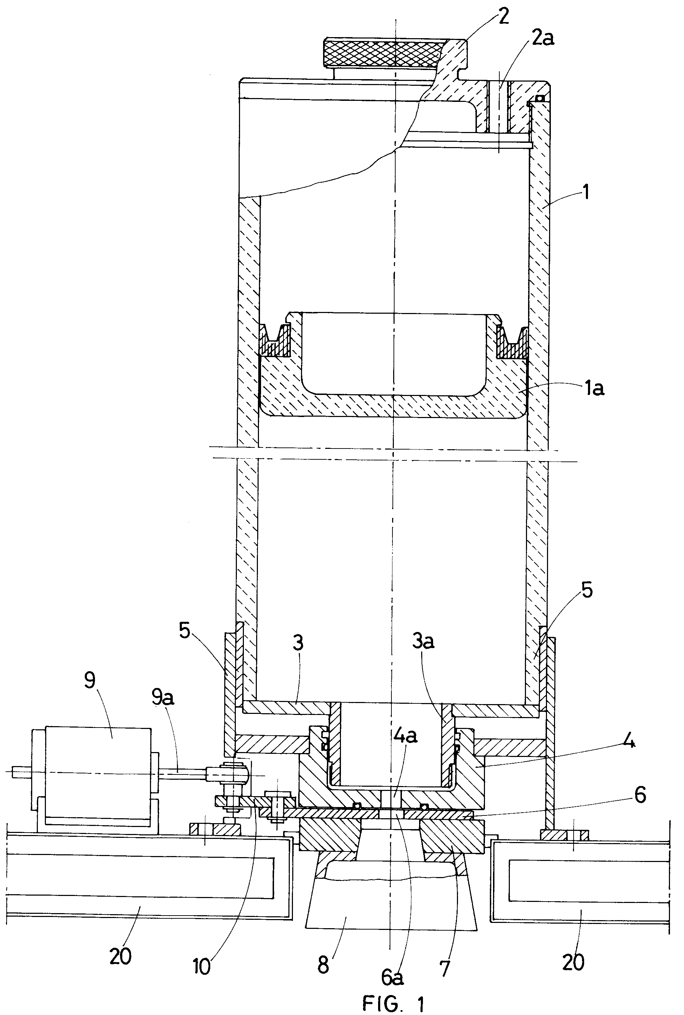

With reference to figure 1 the device in question consists of an ice-cream container (1) having a cylindrical structure made of transparent material and closed at the top by a cover (2) and at the bottom by a bottom plate (3) having a mouthpiece (3a) at the centre which can be coupled - by means of a bayonet attachment - to a cylindrical housing (4) with a hole at the centre of its bottom and supported by a collar shaped base (5) into whose top edge the element (1) fits.

The latter houses a piston (1a) which during operation is subject to the constant pressure of compressed air which is introduced in the top chamber of the cylinder (1) - between the cover (2) and the piston (1a) - through the hole (2a) of the cover (2) in which the pipe is fitted.

At the bottom of the cylindrical housing (4) of the base (5) there is a horizontal gate (6) supported by a plate (7) having a hole at the centre under which a centering bell (8) is applied for the cone or cup to be filled with ice cream.

The above gate (6) automatically performs alternate horizontal translations thanks to the action of a double action actuator (9) whose rod (9a) is attached to the gate (6) by means of an intermediate connection bracket (10).

Obviously the gate (6) has an hole a the middle (6a) corresponding to that (4a) on the bottom of the overlying cylindrical housing (4); the alignment of these two holes will obviously allow the ice cream to be distributed from the cylinder (1) while if the gate (6) is moved out of said hole alignment (6a) and (4a), supply of the product will be unterrupted.

Obviously the amount of ice cream distributed will depend on the time for which the hole (6a) of gate (6) is kept aligned with hole (4a) of the overlying cylindrical housing (4).

With reference to the following figures, the device according to the invention can use an ice cream dosing system with oscillating opening.

In particular for the realization of this solution, a module (M) consisting of a prism-shaped hollow body (11) containing a cylindrical drum (12) with horizontal axis whose shaft (12a) is coupled to an oscillating actuator (13) outside the module (M), is mounted between the bottom face of the cylindrical housing (4) and the centering bell (8).

The side surface of the drum (12) has a hemispheric recess (12b) inside which a semicircular oscillating blade (14) can oscillate, skimming over the surface, supported by two horizontal diametrically opposing coaxial pins (14a); one of these horizontal pins has a keyed pinion (15) which engages with a circular toothed section (16) fitted loose on the shaft (12a) of the drum (12) and interferes with a tension pin (17), which is subject to the constant pressure of an expulsion spring (17a) which is fitted precompressed into the housing of the pin (17) on the side face of the drum (12).

A spiral torsion spring (18) fitted on the shaft (12a) and hooked to the other end of the support of the shaft (12a), is fitted to the toothed circular section (16).

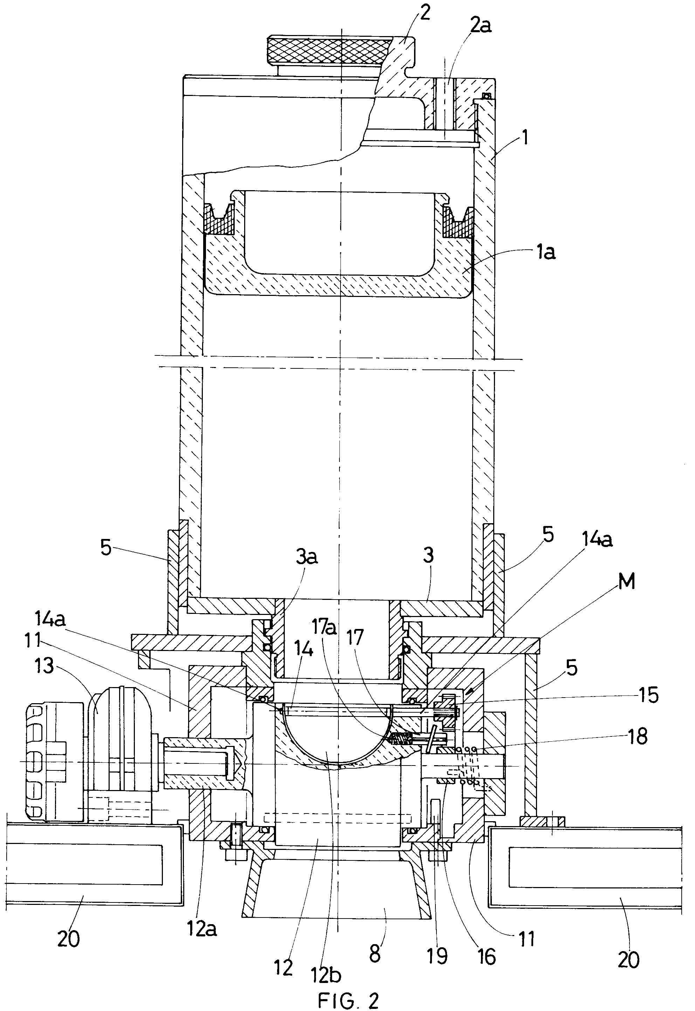

Regarding the operation of the module (M) it should be remarked that when necessary ice-cream is to be supplied from the cylinder (1), the oscillating actuator (13) rotates the shaft (12a) of the drum (12) 180° so as to position the recess (12b) filled with ice cream - which when at rest stops at the top dead point illustrated in figure 2, constantly filled with ice cream - above the centering bell (8).

To allow the detachment of the ball of ice cream held in the recess (12b)), the semicircular blade (14) is activated automatically scraping the internal walls of the recess (12) and detaching the ball of ice cream which will then drop on the cone or cup in the centering bell (8).

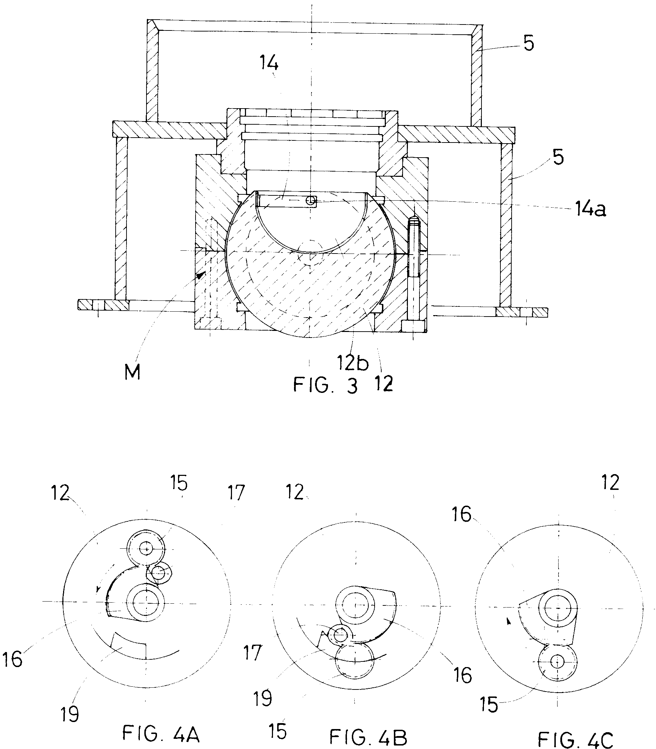

With particular reference to figures 4A, 4B and 4C, a description is now given of the mechanism which operates the above semicircular blade (14).

During its rotation towards the bottom of the recess (12b), the tension pin (17) interferes with the rotation of the toothed circular section (16) and consequently winds the spiral torsion spring (18).

Once the recess (12b) has reached its bottom dead point, a cam (19) makes the pin (17) return into its housing just enough to release the toothed circular section (16), which therefore thanks to the movement provided by the unwinding of the spiral torsion spring (18), rotates the pinion (15) 180° together with the pin (14a) which supports and actions the blade (14).

The recess (12b) then returns to its top dead point thanks to be actuator (13) which actions the shaft (12a) of the drum (12); in said phase the semicircular blade (14) also returns to its position at rest thanks to the rotation of the pinion (15) engaging with the toothed circular section (16).

In Figures 1 and 2 the display stand plane on which the device according to the invention must be installed has been indicated with the number (20).

## Claims

1) A device for the automatic dosing of creamy ice cream consisting of a cylindrical ice-cream container (1), closed at the top by a cover (2) and at the bottom by a bottom plate (3) housing a piston (1a) subject constantly, during operation, to the pressure of compressed air which is introduced into the top chamber of the cylinder (1) - namely that compressed between the cover (2) and the piston (1a) - through the hole (2a) of the cover (2) in which the pipe is fitted; at the centre of the above bottom plate (3) there is a mouthpiece (3a) at the centre which can be coupled - by means of a bayonet attachment - to a cylindrical housing (4) having a hole at the centre of its bottom supported by a collar shaped base (5) into whose top edge the container fits (1); at the bottom of said cylindrical housing (4) of the base (5) there is a horizontal gate (6) - having a hole at the centre (6a) corresponding to the hole on the bottom of the same cylindrical housing (4) - which can automatically perform alternating horizontal translations to start or stop the supply of ice cream from the container (1) thanks to the action of a double action actuator (9) whose rod (9a) is hooked to the gate (6) by means of an intermediate connection bracket (10); said gate is supported by a support plate (7) having a hole at the centre under which a centering bell (8) is applied for the cone or the cup which is to be filled with ice cream supplied from the container (1).

2) A device for the automatic dosing of creamy hand made ice cream according to claim 1, consisting in its preferred embodiment, of a module (M) having a prism shaped hollow body (11) containing a cylindrical drum (12) with a horizontal axis, whose shaft (12a) is coupled to an oscillating actuator (13) outside the module (M), mounted between the bottom face of the cylindrical (4) and the centering bell (8); the side surface of the drum (12) has a semi-spherical recess (12b) inside of which an oscillating semi-circular blade (14) can swing, skimming the surface, supported by two coaxial and diametrically opposing horizontal pins (14a), one of which has a keyed pinion (15) engaging with a toothed circular section (16) fitted loose on the shaft (12a) of the drum (12) and interfering with a tension pin (17), constantly subject to the pressure of an expulsion spring (17a) fitted precompressed into the housing of the pin (17) on the side face of the drum (12); a spiral torsion spring (18) fitted on the shaft (12a) and hooked, at the other end, on the support of the shaft (12a) is hooked to the toothed circular section (16).

FIG. 1

FIG. 2

FIG. 3

FIG. 4A    FIG. 4B    FIG. 4C